Europäisches Patentamt

European Patent Office

Office européen des brevets

(19)

(11) Numéro de publication: **0 194 948**

**A1**

(12)

# DEMANDE DE BREVET EUROPEEN

(21) Numéro de dépôt: **86400539.2**

(22) Date de dépôt: **14.03.86**

(51) Int. Cl.⁴: **F 16 H 55/50**

(30) Priorité: **15.03.85 FR 8503810**

(43) Date de publication de la demande:
**17.09.86 Bulletin 86/38**

(84) Etats contractants désignés:
**AT CH FR IT LI**

(71) Demandeur: **Caoutchouc Manufacturé et Plastiques Société Anonyme dite:**
**49, rue Jean-Jaurès**
**F-95870 Bezons(FR)**

(72) Inventeur: **Charette, Christian**
**140 Bd du Moulin à Vent**
**F-03400 Yzeure(FR)**

(72) Inventeur: **Wanneroy, Roland**
**66 Bd Auguste Blanqui**
**F-75013 Paris(FR)**

(54) **Dispositif répartiteur de contrainte pour galet de guidage de câble de transport aérien.**

(57) Dispositif répartiteur de contraintes, destiné à constituer la garniture d'une poulie de guidage de câble dans un système de transport aérien, caractérisé en ce que la dite garniture comporte au moins deux couches de matériaux, déformables élastiquement, et de duretés dégressives, la couche (1), en contact avec le cable étant réalisée en un matériau anti-abrasif, de dureté supérieure à 60 Shore, la sous-couche (2), en contact avec la gorge de la poulie étant réalisée dans un matériau souple et résilient, dont la dureté est au plus égale à 70 Shore.

FIG. 3a

EP 0 194 948 A1

L'invention concerne les systèmes de transport par cable de charges ou de passagers, tels que des téléskis, des télécabines ou
encore, accessoirement, des funiculaires ou des ascenseurs,
lorqu'un cable doit être guidé, lors du passage à des vitesses
élevées, dans la gorge d'un galet, d'une poulie ou d'une roue de
guidage et que l'enroulement ne s'opère que sous un angle de
contact faible.

Pour faciliter la compréhension de la description de l'invention,
un galet sera défini comme l'ensemble formé par une poulie de guidage, généralement métallique, et une garniture constituée d'un
matériau déformable élastiquement.

Dans un grand nombre de systèmes de transport par cable, les cables tracteurs sont obligés de s'enrouler sur une roue motrice
ainsi que sur une poulie de renvoi. En conséquence, on utilise,
généralement, des cables formés de torons qui présentent les possibilités de flexion nécessaires à l'enroulemement.

Lorsque la surface extérieure de ces cables s'appuie, sur un demi-
tour environ, dans la gorge d'une poulie, le contact s'opère tangentiellement à un tore; une garniture par revêtement élastomérique, déformable, parvient à répartir convenablement les contraintes aux points de contact, ce qui confère à cette garniture
une durée de vie raisonnable, et ce d'autant mieux que la poulie
est de diamètre généralement très grand par rapport à celui du
cable et que, par conséquent, la surface d'appui est importante.

Au contraire, dans les changements de pente ou d'orientation qui
se font par appui sur la gorge d'une poulie non motrice - et, en
général, dans les points d'appui intermédiaires de tout transport
par cable - ledit appui se produit le long d'un arc de contact de
faible longueur où le cable est tangent à la gorge de la poulie de
guidage.

Divers systèmes ont été étudiés comme garniture de la poulie pour
assurer un contact plus ou moins élastique entre la jante de la poulie et le cable afin de minimiser l'usure des organes métalliques et l'inconfort au passage des points singuliers et d'augmenter les performances en vitesse et en charge par poulie.

On trouve sur le marché du transport par cable des galets dont la garniture est réalisée en matière élastomère à très haut module et très haute dureté, caractéristiques nécessaires pour résister à l'attaque mécanique du cable.

Au cours du fonctionnement, cette garniture devient donc tangente à un toron du cable, sur un arc très court, avant de venir en appui sur le toron suivant; lorsque la surface de la garniture enveloppe plusieurs torons — alors simultanément tangents — et que le cable est soumis à une charge, il en résulte une déformation de la garniture engendrant une surface de contact d'autant plus limitée que la déformation est faible. Or, les élastomères de qualité anti-abrasion et de module élevé ne présentent qu'une faible possibilité de déformation.

La déformation ainsi produite reste très localisée dans la zone de contact du cable; l'entrée en contact de chacune des surfaces hélicoïdales externes des torons provoque, dans cette zone, des contraintes bien supérieures à ce que peut supporter localement un caoutchouc ou même un élastomère de polyuréthanne.

Les utilisateurs souhaitent accroître les performances des systèmes de transport par cable, et, en particulier, augmenter les vitesses au dessus du seuil actuel de 5 m/s et les charges au dessus de 500 Kg par poulie. Dans ces conditions nouvelles, la concentration des contraintes dans la zone localement déformée entrainera une élévation importante de la température provoquant une destruction locale de la garniture sous l'effet des déformations de l'attaque mécanique et abrasive du cable.

D'autre part, cette succession de contraintes localisées au passage de chaque toron est une source de phénomènes vibratoires au sein du cable, à des fréquences très inconfortables pour les passagers et les matériaux transportés.

Il convient de noter que diverses autres solutions ont été envisagées. Le brevet français 1 488 224 fait référence à l'emploi d'un pneumatique comportant une gorge de guidage. Un tel système, s'il apporte une amélioration sur le plan vibratoire, est onéreux dans sa réalisation et pour sa maintenance.

Comme on peut le constater d'après l'analyse précédente, une solution conforme à l'état de la technique et qui permette de répondre aux exigences simultanées de confort et de résistance à l'usure mécanique et abrasive n'est pas connue.

L'invention consiste à réaliser un répartiteur de contrainte qui sera utilisé comme garniture élastique pour la gorge d'une poulie destinée à guider un cable porteur de transport par cable. La dite garniture est constituée par superposition d'au moins deux couches de matériaux de modules différents. La couche externe, en contact avec le cable, sera réalisée dans un matériau anti-abrasif, de dureté au moins égale à 60 Shore afin de résister aux contraintes superficielles et à l'attaque mécanique créée par la surface toronnée du cable. La couche la plus interne, en contact avec la jante de la poulie sera constituée d'un matériau à dureté au plus égale à 70 Shore. Son objet est de donner à l'ensemble de la garniture une rigidité globale réduite en augmentant, par flexion, la surface de contact avec le cable. Une ou plusieurs couches intermédiaires peuvent être interposées pour assurer une transition progressive entre les caractéristiques opposées des couches extrèmes.

L'invention a donc pour effet de réduire les contraintes au contact du revêtement, d'en assurer une meilleure répartition dans l'ensemble de la garniture et, par conséquent, de minimiser les effets vibratoires et donc d'accroître le confort des passagers et des produits transportés. Cet effet est obtenu grâce à la déformabilité de la (ou des) sous-couche(s) qui permet(tent) à la couche anti-abrasive de surface de mieux suivre, par flexion, les irrégularités de surface du cable.

Les caractéristiques et variables de l'invention seront mieux comprises à la lecture de la description ci-après et en se référant
aux dessins, pour lesquels :

- la figure 1 représente la zone de contact d'un cable toronné et
de la garniture de la gorge d'une poulie de guidage, dans les utilisations connues antérieurement;

- la figure 2 schématise la constitution de la garniture multi-
couche de la gorge d'une poulie de guidage, selon l'invention;

- la figure 3 représente la zone de contact du cable toronné et de
la garniture selon l'invention, déformée sous l'effet de la charge;

- la figure 4 illustre différentes formes de la rainure de guidage
du cable ménagée dans la couche anti-abrasive de la garniture.

- la figure 5 montre une réalisation particulière de l'invention;

- la figure 6 schématise le renforcement de la couche anti-
abrasive par un pli textile;

- la figure 7 illustre une autre variante de l'invention.

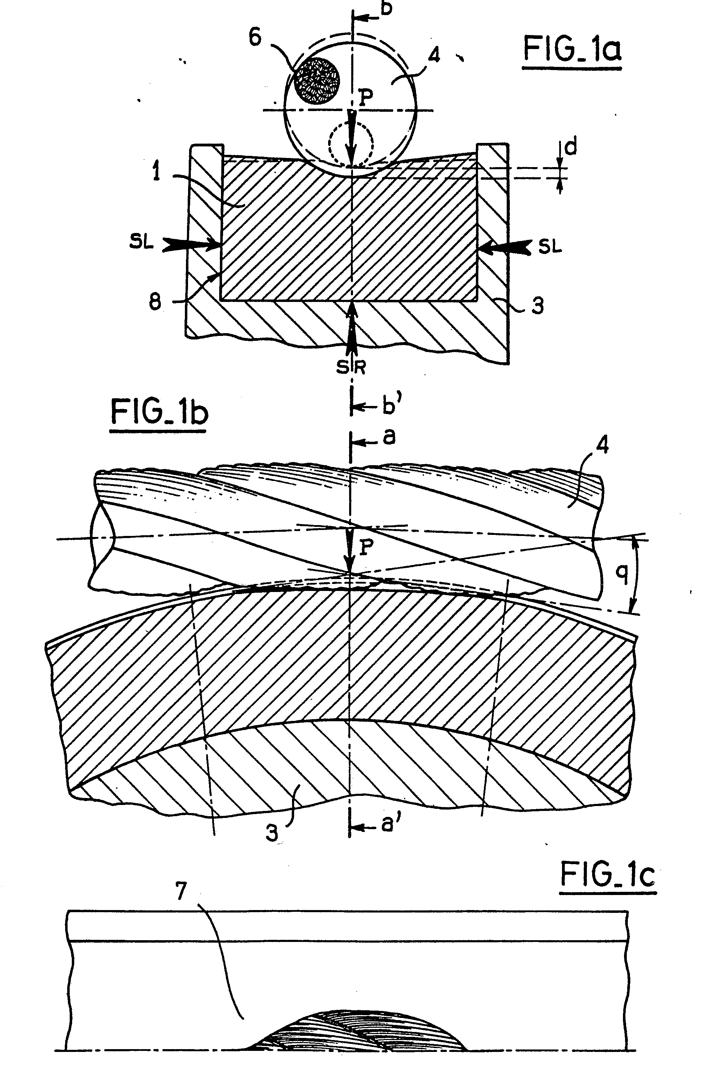

Dans la figure 1 qui illustre les dispositifs connus antérieurement, la vue 1a représente la coupe selon aa' de la figure 1b du
cable (4) constitué de torons (6) et de la gorge (8) de la poulie
(3). La gorge (8) est munie de sa garniture élastique (1), de dureté élevée, qui est maintenue dans la dite gorge (8) par différents moyens mécaniques donnant un serrage latéral (SL) et un serrage radial (SR). Sous la charge (P), le cable (4) provoque dans
la garniture (1) une déformation (d) avec une concentration très
élevée des contraintes dans la zone d'appui.

La vue 1b, coupe selon bb' de la vue 1a, met en évidence l'angle
(q) que forment les directions d'entrée et de sortie du cable (4)
sur la garniture (1) de la poulie (3).

La vue 1c est une vue de dessus de la figure 1b. Elle montre tout
particulièrement l'empreinte (7), de très faible surface, laissée
par les torons du cable sur la surface d'appui de la garniture.

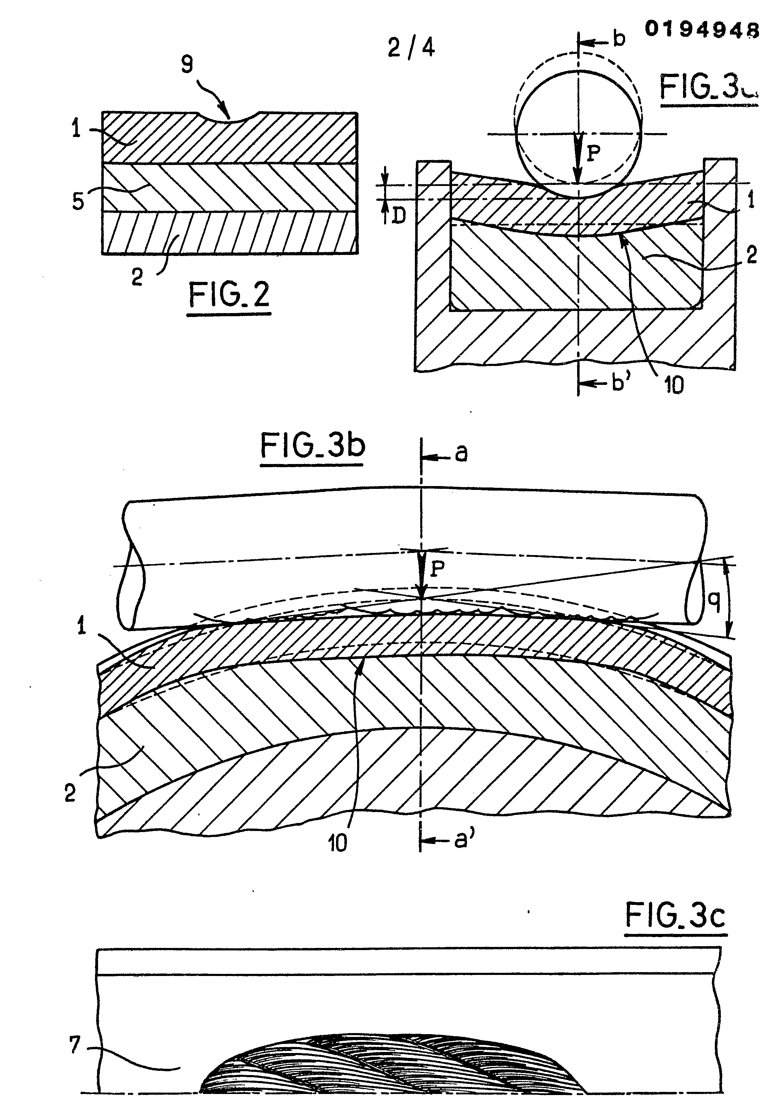

La figure 2 schématise la composition de la garniture multi-couche
selon l'invention. La couche (1), en contact avec le cable, est
constituée d'un matériau anti-abrasif de dureté supérieure à 70
Shore. La couche (2), au contact du fond de la gorge de la poulie
est constituée d'un matériau élastique, souple et résilient, dont
la dureté est au plus égale à 70 Shore. Une couche intermédiaire
(5) assure, par ses caractéristiques propres, une transition entre
les propriétés opposées des matériaux des couches (1) et (2). Les
matériaux des sous-couches (2) et (5) peuvent être compacts ou
cellulaires. La rainure de guidage du cable (9) est ménagée dans
l'épaisseur de la couche anti-abrasive (1). L'épaisseur de la dite
couche anti-abrasive (1) est, généralement, comprise entre 0,1 et
0,5 fois l'épaisseur totale de la garniture multi-couche. Avantageusement, la couche anti-abrasive (1) sera réalisée dans un matériau composite à base de caoutchouc ou d'élastomère de polyuréthanne renforcé de fibres courtes; la quantité de fibres introduite dans le mélange permet d'ajuster la dureté à la valeur désirée.

Une variante (non représentée) de la couche anti-abrasive (1) est
réalisée par superposition de plis de mélange à base de caoutchouc
ou d'élastomère de polyuréthanne de duretés dégressives de l'extérieur de la garniture vers la sous-couche, la gamme des duretés de
l'ensemble de ces plis étant comprise entre 60 et 95 Shore. Pour
faciliter la dissipation de chaleur, la matrice du mélange à base
de caoutchouc ou d'élastomère de polyuréthanne, constitutif de la
couche anti-abrasive (1) présentera une conductibilité thermique
élevée, par exemple supérieure à 0,20 W/m/°C.

La figure 3 représente le comportement d'un dispositif à deux couches selon l'invention, sous une charge (P) identique à celle appliquée à la garniture de la figure 1.

Sur la vue 3a, coupe selon aa' de la vue 3b, la couche superficielle (1), anti-abrasive, aura, sous l'effort (P) une déformation (D) qui est plus importante que dans les dispositifs classiques, grâce à la déformation (SM) de l'interface (10) entre la couche à haute rigidité (1) et la sous-couche, plus souple, (2).

La vue 3b, coupe selon bb' de la vue 3a, montre l'effet de la déflexion (D) sur l'interface (10). Pour la même valeur de l'angle (q), la zone de contact entre le cable et la garniture se rapproche de la corde de l'arc de contact.

La vue 3c illustre l'aire de la surface de contact ou empreinte (7) entre le cable et la rainure de guidage du cable.

La comparaison des vues 1c et 3c montre l'accroissement important de l'aire de l'empreinte (7), pour un même effort, dans le cas de l'invention, ce qui conduit à la réduction des contraintes.

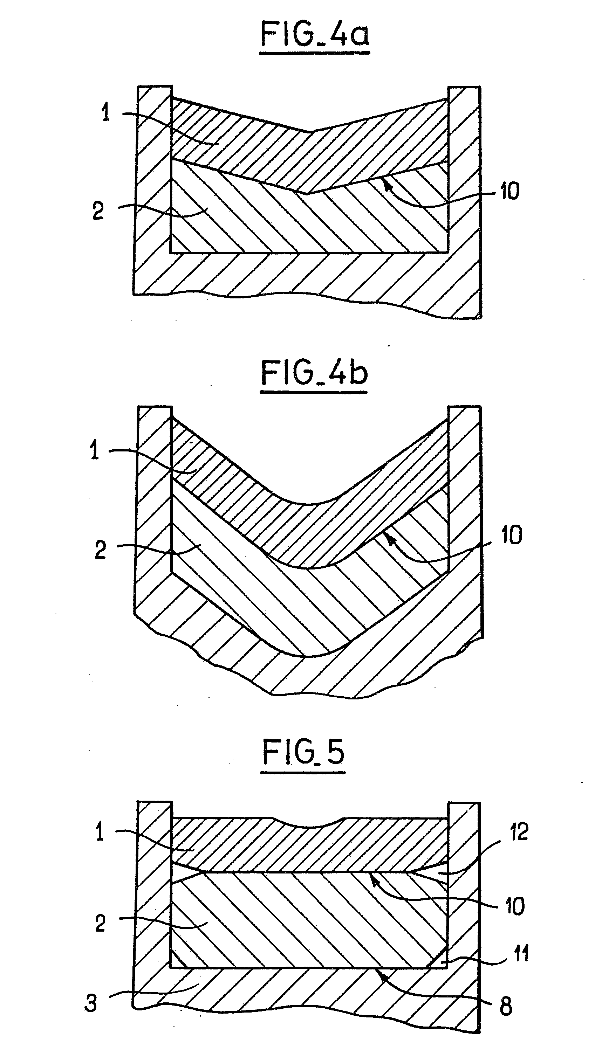

Sur la figure 4, les vues 4a et 4b illustrent, à titre d'exemple non limitatif, quelques formes particulières que peut prendre la rainure de guidage du cable (9), ménagée dans la couche anti-abrasive (1) de la garniture de la poulie. Selon les besoins, l'interface (10) entre la couche (1) et la sous-couche (2) prend ou non la même forme que la surface externe de la garniture.

La figure 5 représente une forme particulière de l'invention dans laquelle sont ménagées des lacunes (11) et (12), soit à la surface de contact entre la gorge (8) de la poulie (3) et la sous-couche (2) en ce qui concerne la lacune (11), soit à l'interface (10) de la sous-couche (2) et de la couche anti-abrasive (1) en ce qui concerne la lacune (12). Ces lacunes ont pour objet d'accroître la déformabilité du matériau constitutif de la sous-couche (2).

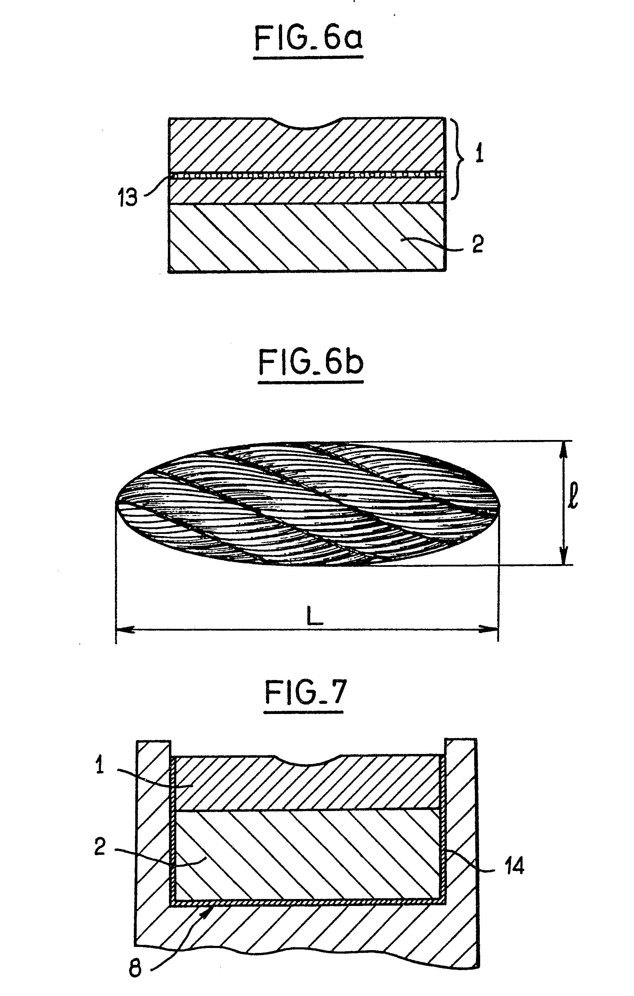

Sur la figure 6, la vue 6a schématise, en coupe, le renforcement de la couche anti-abrasive (1) par un pli de textile (13) noyé dans le mélange à base de caoutchouc ou d'élastomère polyuréthanne.

La vue b reprend l'image de l'empreinte (7) conformément à la vue 3c.

Selon les besoins, le pli textile (13) peut être constitué :

- de câblés enroulés circonférentiellement, ce qui permet d'accroître la longueur L de l'empreinte (7),

- de câblés disposés parallèlement aux génératrices de la garniture, ce qui permet d'accroître la largeur 1 de l'empreinte (7),

- de câblés disposés obliquement ou de tissus, ce qui permet d'accroître simultanément la longueur L et la largeur 1 de l'empreinte (7).

L'insertion de ce pli textile (13) permet donc, en modulant la surface de l'empreinte (7), de réduire la contrainte sous une même charge (P).

La figure 7 représente une variante de l'invention dans laquelle la garniture multi-couche comporte sur les faces en contact avec la gorge (8) de la poulie (3) un revêtement à base de caoutchouc (14) présentant un coefficient de frottement élevé. Ce revêtement (14) a pour objet d'accroître l'adhérence mécanique entre les flasques et le fond de la gorge (8) de la poulie (3) afin d'éviter, en cas de surcharge ou de mauvais fonctionnement, que la garniture ne tourne autour de l'axe de la poulie.

Une variante non représentée de l'invention consiste à n'appliquer, pour d'éventuelles raisons d'encombrement latéral, ce revêtement (14) que sur la partie de la garniture qui se trouve en contact avec le fond de la gorge (8) de la poulie (3).

La garniture de poulie objet de l'invention est réalisée, sur le plan industriel, par les méthodes classiques de l'industrie de transformation des polymères, une confection ou un moulage suivis d'une vulcanisation.

Dans l'un des procédés utilisables, la garniture de la poulie est confectionnée par enroulement sur un support ou mandrin de ses éléments constitutifs, matériaux élastiques de duretés différentes et, éventuellement, renforts textiles avec, si nécessaire interposition d'une couche d'adhésif pour lier entre eux les éléments non auto-adhérents. L'ébauche ainsi fabriquée est placée dans un moule de formes et de dimensions appropriées qui vient prendre place sous les plateaux d'une presse où il est soumis à l'action simultanée de la température et de la pression. A la fin du cycle de vulcanisation, l'article fini est démoulé.

Les applications de l'invention ne sont pas limitées aux exemples décrits. Entre autres possibilités, le dispositif répartiteur de contraintes objet de l'invention est utilisable dans les systèmes de transport aérien qui utilisent des cables clos au lieu de cables toronnés.

Comme on le voit par la description et les illustrations qui précèdent, le dispositif répartiteur de contraintes proposé permet de résoudre les problèmes de confort et d'usure qui se rencontrent de plus en plus fréquemment dans les transports aériens par cable, du fait de la recherche actuelle de performances accrues, notamment en vitesse et en charge par poulie.

L'homme de l'art peut, bien entendu, apporter au dispositif décrit précédemment et à ses applications illustrées à titre d'exemples non limitatifs, diverses modifications sans sortir du cadre de l'invention.

REVENDICATIONS

1°) Dispositif répartiteur de contraintes, destiné à constituer la garniture d'une poulie de guidage de cable dans un système de transport aérien, caractérisé en ce que la dite garniture comporte au moins deux couches de matériaux, déformables élastiquement, et de duretés dégressives, la couche (1), en contact avec le cable (4) étant réalisée en un matériau anti-abrasif, de dureté supérieure à 60 Shore, la sous-couche (2), en contact avec la gorge (8) de la poulie (3) étant réalisée dans un matériau souple et résilient, dont la dureté est au plus égale à 70 Shore.

2°) Garniture de poulie de guidage d'un cable de transport aérien selon la revendication 1, caractérisée en ce que l'une au moins des couches de matériaux déformables élastiquement comporte un renforcement textile (13).

3°) Garniture de poulie de guidage d'un cable de transport aérien selon l'une des revendications 1 ou 2, caractérisée en ce que l'épaisseur de la couche anti-abrasive (1) est comprise entre 0,1 et 0,5 fois l'épaisseur totale de la garniture.

4°) Garniture de poulie de guidage d'un cable de transport aérien selon l'une des revendications 1 à 3, caractérisée en ce que la couche anti--abrasive (1) est constituée d'un empilement de plis de mélanges à base de matériaux déformables élastiquement, de duretés dégressives de la surface externe vers la sous-couche (2) et dont les duretés sont comprises entre 60 et 95 Shore.

5°) Garniture de poulie de guidage d'un cable de transport aérien selon l'une des revendications 1 à 4, caractérisée en ce que la couche anti--abrasive (1) est constitué d'un mélange élastique renforcé de fibres courtes.

6°) Garniture de poulie de guidage d'un cable de transport aérien selon l'une des revendications 1 à 5, caractérisée en ce que la couche anti-abrasive est constituée d'un mélange élastique dont la conductibilité thermique est au moins égale à 0,20 W/m/°C.

7°) Garniture de poulie de guidage d'un cable de transport aérien selon l'une des revendications 1 à 6, caractérisée en ce qu'un renfort de cablés textiles (13), enroulés circonférentiellement, est noyé dans le mélange élastique de la couche anti-abrasive (1).

8°) Garniture de poulie de guidage d'un cable de transport aérien selon l'une des revendications 1 à 6, caractérisée en ce qu'un renfort de cablés textiles (13), dont la direction est parallèle à celle des génératrices de la garniture, est noyé dans le mélange élastique de la couche anti-abrasive (1).

9°) Garniture de poulie de guidage d'un cable de transport aérien selon l'une des revendications 1 à 6, caractérisée en ce qu'un renfort de tissu ou de cablés textiles (13), dont la direction est oblique par rapport à celle des génératrices de la garniture, est noyé dans le mélange élastique de la couche anti-abrasive (1).

10°) Garniture de poulie de guidage d'un cable de transport aérien selon l'une des revendications 1 à 9, caractérisée en ce que l'une au moins des couches est constituée d'élastomère de polyuréthanne.

11°) Garniture de poulie de guidage d'un cable de transport aérien selon l'une des revendications 1 à 10, caractérisée en ce qu'elle comporte trois couches de matériaux déformables élastiquement, la dureté de la couche anti-abrasive (1) étant supérieure à celle de la sous-couche intermédiaire (5), elle même supérieure à la dureté de la sous-couche (2) en contact avec le fond de la gorge (8) de la poulie (3)

12°) Garniture de poulie de guidage d'un cable de transport aérien selon l'une des revendications 1 à 11, caractérisée en ce que la sous couche (2) ou la sous-couche intermédiaire (5), souple et résilente, de dureté inférieure à 70 Shore, est constituée d'un matériau cellulaire.

13°) Garniture de poulie de guidage d'un cable de transport aérien selon l'une des revendications 1 à 12, caractérisée en ce que des lacunes (11) ou (12) sont ménagées dans la zone de contact de la sous-couche (2) avec la couche (1) ou la sous-couche (5) adjacente, ou encore avec le fond de la gorge (8) de la poulie (3).

14°) Garniture de poulie de guidage d'un cable de transport aérien selon l'une des revendications 1 à 13, caractérisée en ce qu'un matériau à coefficient de frottement élevé est appliqué sur tout ou partie de la surface de la garniture en contact avec la gorge (8) de la poulie (3).

1/4

0194948

FIG. 1a

FIG. 1b

FIG. 1c

FIG.2

FIG.3a

FIG.3b

FIG.3c

## FIG_4a

## FIG_4b

## FIG_5

0194948

## FIG.6a

## FIG.6b

## FIG.7

**0194948**
Numéro de la demande

Office européen
des brevets

**RAPPORT DE RECHERCHE EUROPEENNE**

EP 86 40 0539

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 265 904   (SEMPERIT) <br> * En entier * | 1-3,5 | F 16 H   55/50 |
| A | GB-A-  737 365   (DYNAMIT) <br><br> * En entier * | 1,2,7, ·8,10 | |
| A | FR-A-2 146 718   (RUHRKOHLE) | | |
| A | FR-A-2 345 632   (LORUNSER) | | |
| D,A | FR-A-1 488 224   (POMAGALSKI) | | |

---

DOMAINES TECHNIQUES
RECHERCHES (Int. Cl.4)

F 16 H   55/00
B 61 B   12/00

Le présent rapport de recherche a été établi pour toutes les revendications

| Lieu de la recherche <br> LA HAYE | Date d'achèvement de la recherche <br> 26-05-1986 | Examinateur <br> FLORES E. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82